# EUROPEAN PATENT APPLICATION

(11) **EP 4 207 136 A1**
(43) Date of publication of application: **05.07.2023**
(21) Application number: 21860932.9
(22) Date of filing: 17.06.2021
(51) Int. Cl.: G09B 9/00, G09B 23/28

(54) **BLOOD VESSEL MODEL**

(30) Priority: 25.08.2020 JP 2020141461
(71) Applicant: Asahi Intecc Co., Ltd., Seto-shi, Aichi 489-0071 (JP)
(72) Inventor: YONEYAMA Rina, Seto-shi, Aichi 489-0071 (JP)
(74) Representative: Winter, Brandl - Partnerschaft mbB
(86) International application number: PCT/JP2021/022993
(87) International publication number: WO 2022/044501

(57) **Abstract**

Provided is a blood vessel model wherein a diffusion image of a contrast medium, the diffusion image being in response to an increase or a decrease in the intravascular pressure of a simulated blood vessel, approximates a clinical diffusion image of the contrast medium.

The blood vessel model is provided with a simulated blood vessel body formed of an elastic material. The simulated blood vessel body has a communication hole that penetrates the vessel wall of the simulated blood vessel body. The communication hole opens when the periphery of the communication hole undergoes elastic deformation in response to the intravascular pressure of the simulated blood vessel body.

## Description

### TECHNICAL FIELD

The technique disclosed in the present specification relates to a blood vessel model.

### BACKGROUND ART

A simulator provided with a blood vessel model (such as a simulated blood vessel or the like) that simulates an actual blood vessel is used to simulate clinical treatment or examination using a catheter or the like.

In clinical treatment or examination using a catheter or the like, angiography is sometimes used to grasp the circulatory dynamics such as the blood flow rate or blood viscosity, and the occlusion state of a blood vessel. In angiography, X-ray imaging is performed by injecting a contrast medium with low X-ray transparency through a catheter inserted into a blood vessel. The operator visually observes the circulatory dynamics and the state of the blood vessel by using changes in the contrast of the obtained X-ray fluoroscopic images (still images or moving images, which are also referred to as "cine images") to observe the flow of the contrast medium.

Various blood vessel models have been proposed that enable the flow of a contrast medium in X-ray fluoroscopic images using a blood vessel model to be used to approximate the flow of a contrast medium that is actually clinically observed. For example, disclosed is a blood vessel model (simulated human body) that simulates a clinical diffusion image of a contrast medium that, due to differences in structure between the blood vessel model and an actual human body, dilutes the contrast medium in parts where the contrast medium is only imaged in an X-ray fluoroscopic image using the blood vessel model, until the concentration of the contrast medium becomes a concentration that is not imaged in the X-ray fluoroscopic image (for example, see Patent Literature 1).

### CITATION LIST

### Patent Literature

Patent Literature 1: Japanese Unexamined Patent Application Publication No. 2012-68505

### SUMMARY OF INVENTION

### TECHNICAL PROBLEM

In actual clinical practice, there are relatively wide blood vessels such as arteries, and relatively narrow blood vessels such as capillaries. A contrast medium that is flowing through blood vessels, for example, has a tendency to flow into the narrow blood vessels when the blood pressure (intravascular pressure) is elevated due to a contraction movement of the heart, and is less likely to flow into the narrow blood vessels when the blood pressure is lowered due to an expansion movement of the heart. In other words, in clinical diffusion images of a contrast medium, the narrow blood vessels tend to be imaged when the blood pressure is elevated, and the narrow blood vessels are less likely to be imaged when the blood pressure is lowered. Therefore, in the blood vessel model, it is preferred that the diffusion images of the contrast medium obtained in response to an increase or a decrease in the intravascular pressure of the simulated blood vessel approximate the clinical diffusion images of the contrast medium.

### SOLUTION TO PROBLEM

The present specification discloses a technique capable of solving the problem described above. The technique disclosed herein can be implemented as the aspects described below, for example.
(1) A blood vessel model disclosed in the present specification includes a simulated blood vessel body formed of an elastic material, wherein the simulated blood vessel body has a communication hole that penetrates a vessel wall of the simulated blood vessel body, and the communication hole opens when a periphery of the communication hole undergoes elastic deformation in response to an intravascular pressure of the simulated blood vessel body. That is, in the present blood vessel model, for example, the communication hole can be opened by increasing the intravascular pressure of the simulated blood vessel body, and the communication hole can be closed by decreasing the intravascular pressure. In other words, in the present blood vessel model, a fluid (such as a contrast medium) flowing through the simulated blood vessel body can be diffused and discharged through an opening of the communication hole to the outside of the simulated blood vessel body in response to the intravascular pressure of the simulated blood vessel body. As a result, in the present blood vessel model, the X-ray fluoroscopic images obtained when using a contrast medium are capable of simulating the contrast of the contrast medium observed in actual clinical X-ray fluoroscopic images (for example, the diffusion of the contrast medium into the narrow blood vessels such as capillaries in response to an increase or a decrease in the blood pressure). Therefore, according to the present blood vessel model, it is possible to provide a blood vessel model in which the diffusion images of the contrast medium obtained in response to an increase or a decrease in the intravascular pressure of the simulated blood vessel body approximate the contrast images obtained in an actual clinical observation.
(2) The blood vessel model described above may be configured such that the communication hole is a linear slit, and the slit, when viewed in a direction penetrating the vessel wall, is substantially letter-V shaped or substantially letter-U shaped, and has a curved portion protruding in an extending direction of the simulated blood vessel body. In the blood vessel model adopting the present configuration, the curved portion of the slit undergoes deformation and the open area of the slit widens or narrows due to an increase or a decrease in the intravascular pressure of the simulated blood vessel body. That is, it is possible to adjust the amount of the fluid (such as the contrast medium) that is diffused and discharged through the opening of the slit to the outside of the simulated blood vessel body according to the level of increase or decrease in the intravascular pressure of the simulated blood vessel body. As a result, according to the blood vessel model adopting the present configuration, it is possible to provide a blood vessel model in which the diffusion images of the contrast medium obtained in response to the level of increase or decrease in the intravascular pressure of the simulated blood vessel body approximates the contrast images obtained in an actual clinical observation.
(3) The blood vessel model described above may be configured such that the simulated blood vessel body has a supply part at one end portion that is capable of supplying a fluid to an interior of the simulated blood vessel body, and the curved portion of the slit protrudes toward an end portion side that is located on an opposite side, in the extending direction, to an end portion on which the supply part is located. That is, in the blood vessel model of the present configuration, the curved portion of the slit protrudes downstream in the flow direction of the fluid. As a result, according to the blood vessel model adopting the present configuration, it is possible to provide a blood vessel model that approximates contrast images in which the contrast medium diffuses along the flow direction of the blood, such as those obtained in an actual clinical observation.
(4) The blood vessel model described above may be configured such that the blood vessel model is further provided with a simulated myocardium on which the simulated blood vessel body is arranged, and the communication hole is formed in a surface of the simulated blood vessel body on the simulated myocardium side. That is, in the blood vessel model of the present configuration, the contrast medium that has diffused through the communication hole of the simulated blood vessel body diffuses along the simulated myocardium. As a result, according to the blood vessel model adopting the present configuration, it is possible to provide a blood vessel model that approximates contrast images in which the contrast medium diffuses along the surface of the simulated myocardium, such as those obtained in an actual clinical observation, and it is also possible to improve the sense of immersion of the user of the blood vessel model.
(5) The blood vessel model described above may be configured such that the blood vessel model is a heart blood vessel model, and the communication hole opens when the intravascular pressure is 20 mmHg or more and 450 mmHg or less. The range of the intravascular pressure approximates, among arterial blood pressures, common values for the systolic blood pressure (the pressure applied to the coronary artery wall by blood pumped from the heart). In actual clinical practice, the blood pumped from the heart sufficiently spreads through the relatively narrow blood vessels such as capillaries during systole due to the systolic blood pressure. Therefore, in actual clinical practice, the narrow blood vessels such as capillaries can be observed more clearly in contrast images during systole than during diastole. In the blood vessel model adopting the present configuration, when the intravascular pressure is a value equivalent to the systolic blood pressure, the communication hole opens to allow a fluid (such as a contrast medium) to be diffused and discharged. Therefore, according to the blood vessel model adopting the present configuration, it is possible to provide a blood vessel model that approximates contrast images of the coronary artery such as those obtained in an actual clinical observation.

The technique disclosed in the present specification can be implemented in various forms, and can be implemented in forms such as a blood vessel model, a training kit including a blood vessel model, a simulator including a blood vessel model, and a production method thereof.

### BRIEF DESCRIPTION OF DRAWINGS

Fig. 1 is an explanatory diagram of a heart simulator according to a first embodiment.
Fig. 2 is an explanatory diagram of the heart simulator shown in Fig. 1.
Fig. 3 is an XY cross-sectional view of the heart simulator shown in Fig. 1 and 2.
Fig. 4 is an XZ cross-sectional view of a specific main branch portion in section X1 shown in Fig. 1.
Fig. 5 is a YZ cross-sectional view of a specific main branch portion in section X1 shown in Fig. 1.
Fig. 6 is an XY cross-sectional view of a specific main branch portion in part of section X1 shown in Fig. 1.
Fig. 7 is a table of explanatory diagrams of a heart blood vessel model of a heart simulator in second to fifth embodiments.

### EMBODIMENTS OF THE INVENTION

### A. First Embodiment:

A-1. Configuration of Heart Simulator:

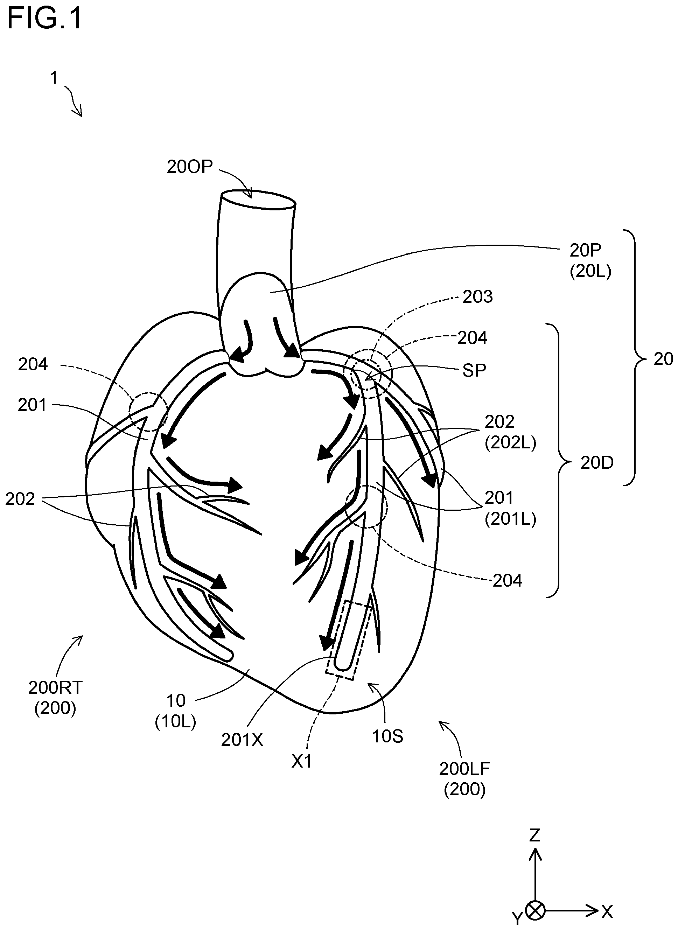

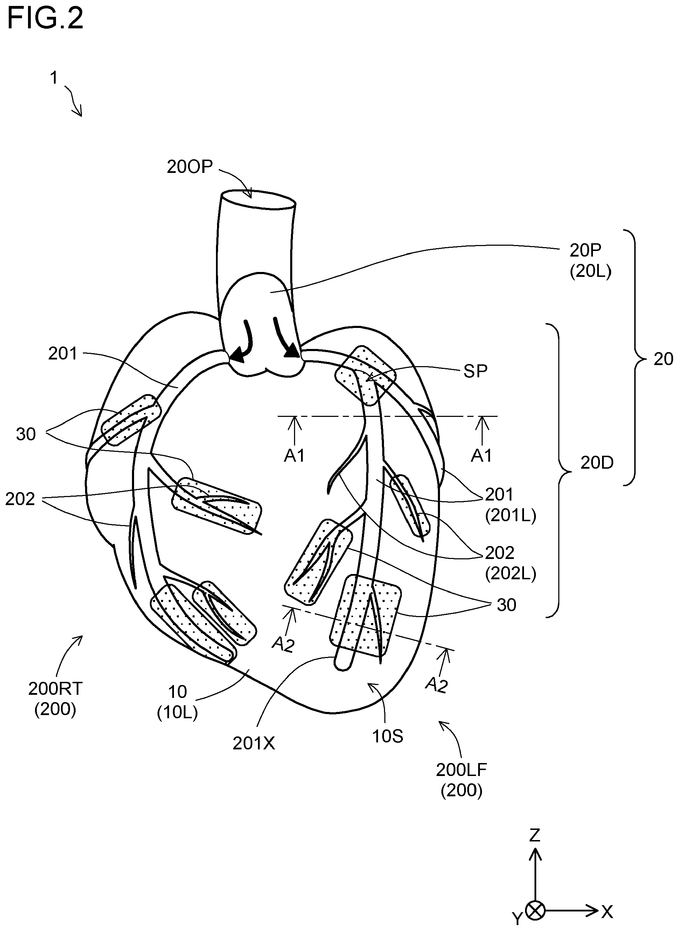

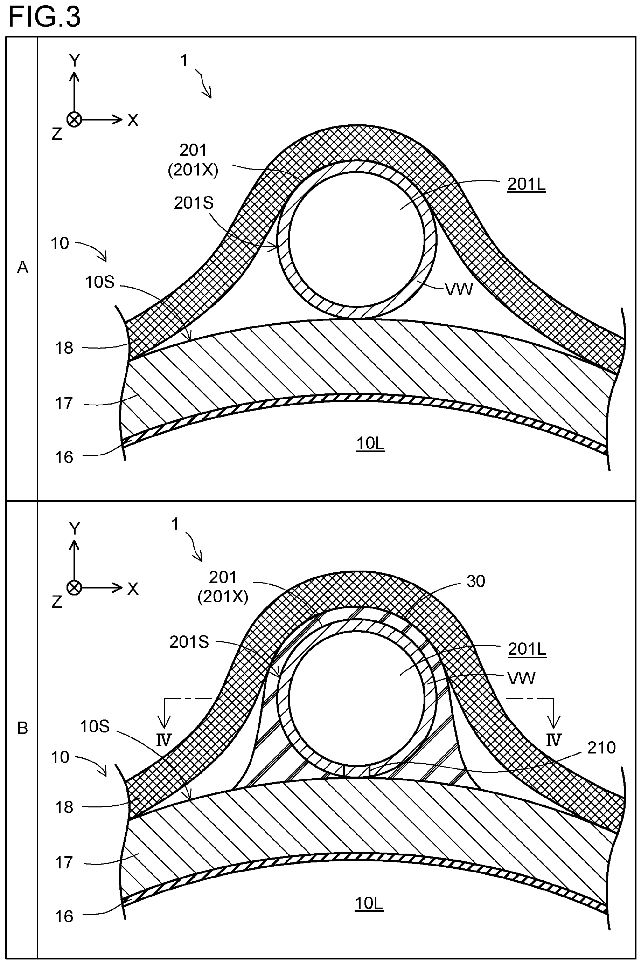

Fig. 1 and 2 are explanatory diagrams of a heart simulator according to a first embodiment. Fig. 3(A) is an XY cross-sectional view of the heart simulator along line A1-A1 in Fig. 2, and Fig. 3(B) is an XY cross-sectional view of the heart simulator along line A2-A2 in Fig. 2. In Fig. 3(A) and 3(B), for convenience of illustration, an enlarged cross-section of one part of the heart model 10 is shown, and only one branch (one part) of the heart blood vessel model 20 arranged on the surface 10S of the heart model 10 (more specifically, the surface of the simulated myocardium 17 described later) is shown. In each diagram, the mutually orthogonal XYZ axes are illustrated to identify the directions. The X-axis corresponds to the left-right direction (width direction) of the heart model 10, the Z-axis corresponds to the height direction of the heart model 10, and the Y-axis corresponds to the depth direction of the heart model 10. In the present specification, for convenience, the positive Z-axis direction is also referred to as the "proximal end side", and the end portion on the proximal end side is also referred to as the "proximal end portion". Similarly, the negative Z-axis direction is also referred to as the "distal end side", and the end portion on the distal end side is also referred to as the "distal end portion". In the present embodiment, the heart blood vessel model 20 only illustrates a shape that simulates the coronary arteries, which are blood vessels for supplying blood to the heart, and illustration of the veins is omitted. The heart simulator 1 is an example of a blood vessel model in the claims. In Fig. 1 and Fig. 2, illustration of the simulated epicardium 18 described later is omitted for convenience.

The heart simulator 1 is a simulator that reproduces the heart and the blood vessels surrounding the surface of the heart. In the present embodiment, the heart simulator 1 includes a heart model 10, a heart blood vessel model 20, and a fixing member 30. More specifically, the heart simulator 1 includes a heart model 10, a heart blood vessel model 20 arranged on the surface 10S of the heart model 10, and a fixing member 30 for fixing the heart blood vessel model 20 to the surface 10S of the heart model 10. According to such a heart simulator 1, the X-ray fluoroscopic images obtained when a contrast medium is used with respect to the heart blood vessel model 20 are capable of simulating the contrast of a contrast medium observed in actual clinical X-ray fluoroscopic images.

The configuration of the heart model 10 will be described using Fig. 1 and Fig. 2. The heart model 10 has an external shape that simulates an actual heart. The heart model 10 can be formed, for example, in a substantially spherical shape to simulate the actual ventricles. As shown in Fig. 3(A) and 3(B), the heart model 10 has a two-layer structure consisting of a balloon 16 and a simulated myocardium 17 to approximate an actual heart. The balloon 16 is a spherical body arranged on the innermost side of the heart model 10, and has a lumen 10L. Examples of materials used to form the balloon 16 include elastic rubber and synthetic resin materials such as a thermoplastic elastomer (TPE). The simulated myocardium 17 covers the surface of the balloon 16. The material used to form the simulated myocardium 17 can be made a porous body from the perspective of functioning as a diffusion channel (buffer channel) that further disperses the contrast medium that has been dispersed from the communication hole 210 described later, which is formed in the heart blood vessel model 20. The simulated myocardium 17 can be formed of a stretchable material so that it can follow the increases and decreases in the volume in the lumen 10L of the balloon 16 caused by the pulsating motion (expansion and contraction motion) of the heart model 10. Examples of materials used to form the simulated myocardium 17 include nonwoven fabrics such as nylon nonwoven fabrics, porous bodies having a plurality of pores formed of foams such as polyurethane foams, polyamide foams, polyethylene foams, silicon foams, and rubber sponges, and synthetic resins of soft materials having X-ray transparency (such as PVA and silicon).

The heart model 10 may further include a simulated epicardium 18. The simulated epicardium 18 is a membranous member that covers the surface 10S of the heart model 10. The simulated epicardium 18 can be formed of a stretchable material so that the heart blood vessel model 20 can be prevented from separating from the heart model 10 (more specifically, the simulated myocardium 17) by following the increases and decreases in the volume of the lumen 10L of the balloon 16 caused by the pulsating motion (expansion and contraction motion) of the heart model 10. The simulated epicardium 18 is, for example, a bag-like member formed of a soft synthetic resin (such as PVA or silicon) having X-ray transparency. The space between the inner surface of the simulated epicardium 18 and the surface 10S of the heart model 10 accommodates the heart blood vessel model 20 (blood vessel model) mentioned above. The simulated epicardium 18 may be formed with a discharge port for discharging the contrast medium or simulated blood discharged from the communication hole 210 described below, which is formed in the heart blood vessel model 20. The discharge port may be provided in the simulated epicardium 18 near the distal end side of the heart model 10 (apex portion) or the like.

The heart model 10, for example, simulates the pulsation of an actual heart by causing the heart model 10 to expand by delivering a fluid to the lumen 10L of the heart model 10, and causing the heart model 10 to contract by suctioning the fluid from the lumen 10L of the heart model 10.

The configuration of the heart blood vessel model 20 will be described using Fig. 1 and Fig. 3. The heart blood vessel model 20 is arranged on the surface 10S of the heart model 10. More specifically, the heart blood vessel model 20 is arranged on the simulated myocardium 17. The heart blood vessel model 20 has a proximal end 20P shaped to simulate a portion of the ascending aorta, and a distal end 20D shaped to simulate left and right coronary arteries. Hereinafter, the part of the heart blood vessel model 20 that simulates the left coronary artery is also referred to as a left coronary artery model 200LF, and the part that simulates the right coronary artery is also referred to as a right coronary artery model 200RT. The left coronary artery model 200LF and the right coronary artery model 200RT are also collectively referred to as a coronary artery model 200.

The material used to form the proximal end 20P and the distal end 20D that constitute the heart blood vessel model 20 are not particularly limited as long as it is an elastic material having X-ray transparency. The Young's modulus of the elastic material can be, for example, about 10 kPa or more and 200 kPa or less from the viewpoint of approximating the elasticity of an actual blood vessel. Examples of the elastic material include synthetic resins such as polyvinyl alcohol (PVA), silicon, and collagen. The materials used to form the members constituting the heart blood vessel model 20 may be the same type of material or different types of materials.

The proximal end 20P is a tubular body that has an opening portion 20OP on the proximal end side and that connects to the main branch portions 201 on the distal end side, and has a lumen 20L. When the heart simulator 1 provided with the heart blood vessel model 20 is used, a fluid (simulated blood or a contrast medium) is diffused throughout the entire heart blood vessel model 20 by supplying the fluid while being pressurized from the opening portion 20OP of the proximal end 20P. In the present embodiment, the proximal end 20P is connected to a supply device (not illustrated) of the fluid described above. The fluid is an example of a fluid in the claims.

The coronary artery model 200 constituting the distal end 20D includes main branch portions 201, side branch portions 202, connection portions 203, and branched portions 204. The main branch portions 201 simulate the main blood vessels in the coronary artery, and the side branch portions 202 simulate the fine blood vessels extending from the main branch portions 201. As shown in Fig. 3(A), the main branch portion 201 is a tubular body having a lumen 201L, and like the main branch portion 201, the side branch portion 202 is also a tubular body having a lumen 202L. More specifically, the main branch portion 201 and the side branch portion 202 are bottomed tubular bodies each having an opening portion (not illustrated) at one end, and a closed portion at the other end which has a closed external shape. In the present specification, "closed external shape" means that the end portion is closed and blocked based on its appearance. That is, it does not mean that it is functionally closed, and for example, it is possible to discharge a fluid from the communication hole 210 described later that is formed in the end portion or the like. The inner diameter of the lumen 201L of the main branch portion 201 is, for example, about 1 mm to 2 mm, and the inner diameter of the lumen 202L of the side branch portion 202 is, for example, about 1 mm to 2 mm. Furthermore, the thickness of the vessel wall of the main branch portion 201 is not particularly limited, but may be, for example, 0.5 mm or more and 1 mm or less, and the thickness of the vessel wall of the side branch portion 202 is not particularly limited, but may be, for example, 0.1 mm or more and 0.5 mm or less. In the following description, the main branch portion 201 and the side branch portion 202 may collectively be referred to as "branch portions 201 and 202", and the lumen 201L and the lumen 202L may collectively be referred to as "lumens 201L and 202L". The detailed configuration of the main branch portion 201 will be described later.

The connection portion 203 is a part that connects one main branch portion 201 to other branch portions 201 and 202. At the connection portion 203, the lumen 201L of one main branch portion 201 and the lumens 201L and 202L of the other branch portions 201 and 202 are connected in a state where they are communicated. The connection can be realized by various means, for example, and may be realized by fastening each of the branch portions 201 and 202 with a fastening tool such as a clip, or may be realized by fixing each of the branch portions 201 and 202 with an adhesive, or may be realized by covering each of the branch portions 201 and 202 with a synthetic resin.

The branched portion 204 is a part that, similarly to an actual human body, branches one branch portion 201 or 202 into one or more branch portions 201 and 202. The one branch portion 201 or 202 and the one or more branch portions 201 and 202 may be connected by a connection portion 203, or they may be integrally formed.

As indicated by the arrows in Fig. 1, in the proximal end 20P of the heart blood vessel model 20, a fluid that has flowed into the lumen 20L (simulated blood or contrast medium) branches into each of the left coronary artery model 200LF and the right coronary artery model 200RT, and proceeds toward the distal end side of the lumens 201L of the main branch portions 201 in each coronary artery model 200LF and 200RT. Along the way, the fluid through the branches at the branched portions 204, and flows to the distal ends of each of the main branch portions 201 and each of the side branch portions 202.

The fixing members 30 are members for fixing each portion of the heart blood vessel model 20, that is, the main branch portions 201 and the side branch portions 202 to the surface 10S (specifically, the surface of the simulated myocardium 17) of the heart model 10 (see Fig. 2). The shape of the fixing members 30 is not particularly limited, and may be, for example, in the form of a seal. Examples of materials used to form the fixing members 30 include synthetic resins of soft materials having X-ray transparency (such as PVA, silicon, polyurethane, and polysaccharides such as carrageenan). As shown in Fig. 2, the heart simulator 1 is provided with a plurality of fixing members 30. The installation positions of the fixing members 30 and the number installed can be arbitrarily determined. The fixing members 30 are, for example, preferably arranged in portions such as those parts where the external force and the pressure in the coronary artery model 200 is higher than in the other parts (connection portions 203 and branched portions 204), and those parts located at the distal end of the coronary artery model 200 (the distal end portions of the side branch portions 202 and the main branch portion 201). The fixing members 30 are, for example, preferably arranged so as to cover the entire surface of the heart blood vessel model 20 (such as the main branch portions 201) excluding the contact parts with the surface 10S of the heart model 10 (specifically, the surface of the simulated myocardium 17). This is to fix the heart blood vessel model 20 with greater certainty to the heart model 10, while also ensuring the fluid that is flowing through the heart blood vessel model 20 is not prevented from diffusing to the surface 10S of the heart model 10 (specifically, the simulated myocardium 17) through the communication hole 210 described later, which is formed in the heart blood vessel model 20. In the heart simulator 1, because the heart blood vessel model 20 can be fixed to the surface 10S of the heart model 10 by the fixing members 30, the positional relationship between the heart model 10 and the heart blood vessel model 20 can be maintained in a desired position.

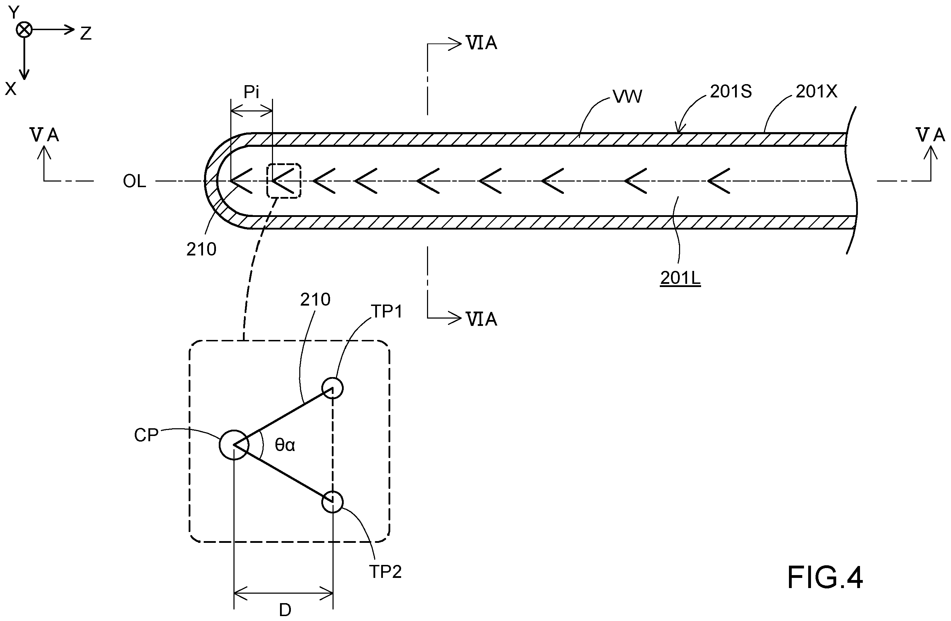

A-2. Detailed Configuration of Main Branch Portion 201:
The detailed configuration of one of the main branch portions 201 (hereinafter, also referred to as "specific main branch portion 201X") among the main branch portions 201 of the coronary artery model 200 will be described. Fig. 4 is an XZ cross-sectional view of a specific main branch portion 201X in section X1 of Fig. 1. Fig. 4 shows enlarged a cross-section of the specific main branch portion 201X at the position IV-IV in Fig. 3(B). The lower section of Fig. 4 (inside the dashed outline) shows enlarged the periphery of a communication hole 210. In Fig. 4, for convenience, the extending direction of the specific main branch portion 201X coincides with the Z-axis direction, and illustration of the fixing members 30 is omitted. The specific main branch portion 201X is an example of a simulated blood vessel body in the claims.

As mentioned above, in the proximal end 20P of the heart blood vessel model 20, the fluid (simulated blood or contrast medium) supplied to the lumen 20L flows from the proximal end to the distal end of the specific main branch portion 201X via a branch at a branched portion 204 (see Fig. 1). In other words, the proximal end portion of the specific main branch portion 201X, which is one of the end portions, functions as a supply part SP capable of supplying the fluid (simulated blood or contrast medium) to the lumen 201L of the specific main branch portion 201X. More specifically, the supply part SP is the part of the specific main branch portion 201X at which the branched portion 204 is located. The lumen 201L of the specific main branch portion 201X is an example of the "interior of the simulated blood vessel body" in the claims, and the supply part SP is an example of a supply part in the claims.

As shown in Fig. 3(B) and Fig. 4, the distal end portion of the specific main branch portion 201X (section X1 of Fig. 1) has a plurality (nine in the present embodiment) of communication holes 210 that penetrate the vessel wall VW of the specific main branch portion 201X. In the present embodiment, the communication holes 210 are formed in the surface 201S of the specific main branch portion 201X on the surface 10S side of the heart model 10 (in other words, on the simulated myocardium 17 side). That is, the communication holes 210 are open so that the lumen 201L of the specific main branch portion 201X and the outside of the lumen 201L (in the present embodiment, the simulated myocardium 17) are communicated. In the present specification, the communication holes 210 refer to holes that transition from a closed state to an open state in response to the intravascular pressure of the specific main branch portion 201X. In the present specification, the "closed state" is not limited to a state where the communication holes 210 are completely closed, and also includes states where there is a gap to an extent that the fluid (specifically, the contrast medium) is not discharged, and the "open state" refers to a state where the communication holes 210 are open to an extent that enables the fluid (specifically, the contrast medium) to be discharged.

In the present embodiment, the communication holes 210 are linear slits. More specifically, in the XZ cross-section in Fig. 4, the communication holes 210 (hereinafter, also referred to as "slits 210" as appropriate) are formed substantially letter-V shaped, having one end portion TP1, another end portion TP2, and a curved portion CP. The slits 210 are formed so that the curved portion CP protrudes on the distal end side of the specific main branch portion 201X (negative Z-axis direction). In other words, the curved portion CP protrudes in the extending direction of the specific main branch portion 201X (Z-axis direction), and on the end portion (distal end portion) side located on the opposite side to the end portion (proximal end portion) at which the supply part SP of the specific main branch portion 201X is located. That is, the curved portion CP of the slit 210 protrudes downstream in the flow direction of the fluid F (simulated blood MB or contrast medium CA). In the present embodiment, the curved portions CP overlap on a central axis OL of the specific main branch portion 201X. The slits 210 formed in this manner function as a valve that can be opened and closed. The XZ cross-section in Fig. 4 is an example of a cross-section in a directional view (Y-axis directional view) in which the slits 210 penetrate the vessel wall VW.

The length from the end portion TP1 to the end portion TP2 of the slit 210 (specifically, the length along the slit 210) is not particularly limited, but from the perspective of enabling the slit 210 to open while also preventing a catheter or the like inserted into the blood vessel from entering the slit 210, for example, it is 0.05 mm or more and 1 mm or less. The distance D between the curved portion CP and the end portion TP 1 (or end portion TP2) in the Z-axis direction is not particularly limited, but from the perspective of opening and closing the slit, it is preferably at least the thickness of the vessel wall VW of the specific main branch portion 201X, and for example, it is 0.5 mm or more and 6 mm or less. The internal angle θα of the curved portion CP is not particularly limited, but from the perspective of opening and closing the slit with the flow of the fluid, for example, it is 45° or more and 90° or less. The plurality of slits 210 are not particularly limited, but as shown in Fig. 4, for example, they may be formed such that the spacing Pi between a slit 210 and a slit 210 adjacent to the slit 210 (hereinafter referred to as "pitch Pi") becomes smaller (narrower) in moving from the proximal end side to the distal end side of the specific main branch portion 201X. As a result of such a configuration, the contrast medium CA is more easily diffused over a wide range toward the distal end side of the specific main branch portion 201X, which enables the X-ray fluoroscopic images obtained when using a contrast medium to more closely approximate the contrast of the contrast images observed in actual clinical X-ray fluoroscopic images (for example, the spreading of the contrast medium along the arterioles, followed by diffusion and disappearance in the venules). Such a slit 210 can be formed, for example, by a method that uses a syringe needle having a substantially letter-V shaped cross-section to puncture the vessel wall VW of the specific main branch portion 201X or the like.

A-3. Operation of Heart Simulator 1:

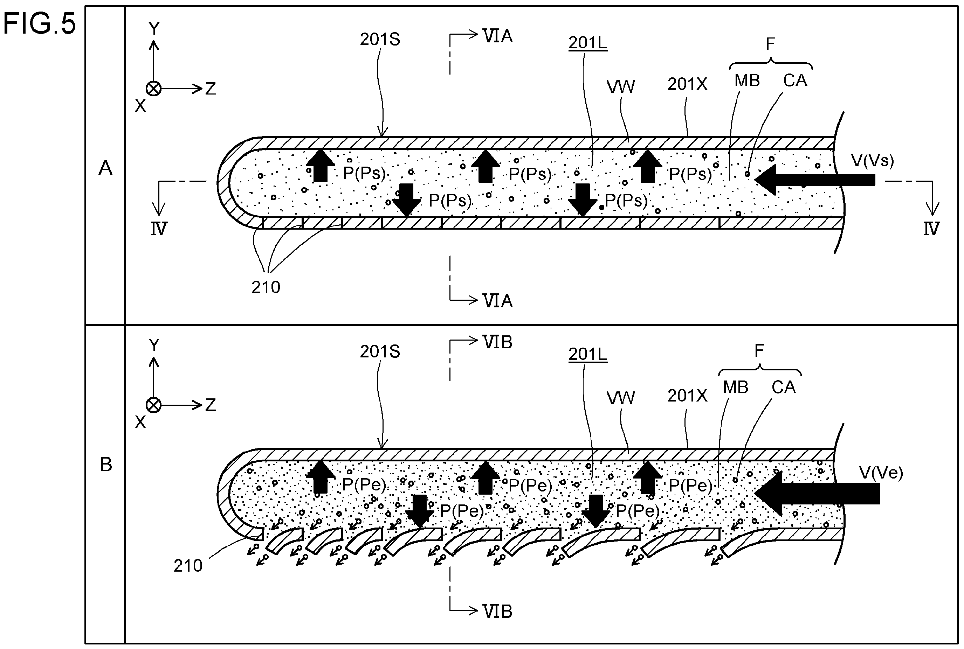

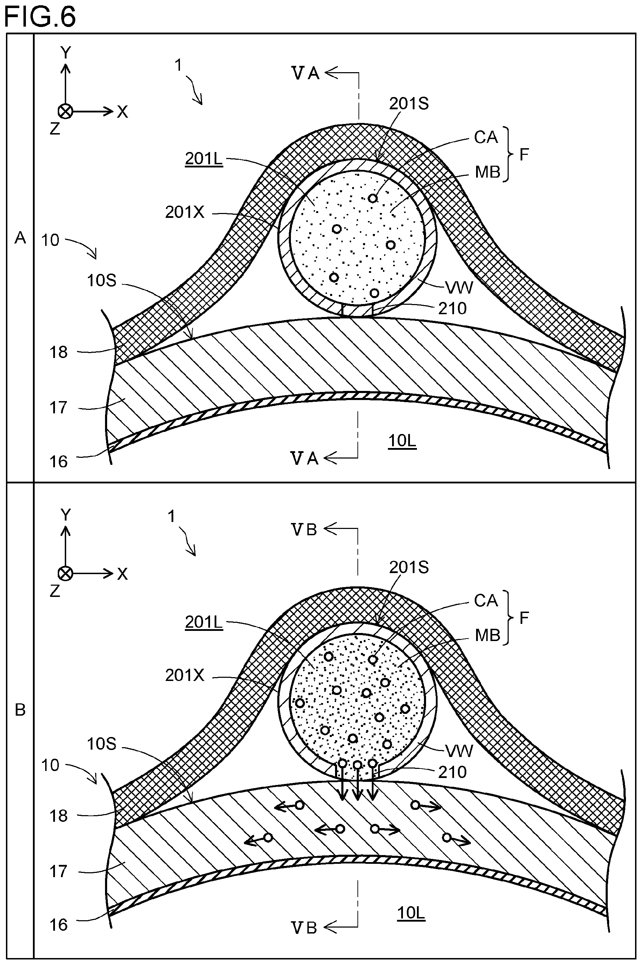

Fig. 5 and Fig. 6 describe the operation of the heart simulator 1 according to the present embodiment. Fig. 5 is an YZ cross-sectional view of the specific main branch portion 20 1X in section X1 of Fig. 1, and Fig. 6 is an XY cross-sectional view of the specific main branch portion 201X in part of section X1 shown in Fig. 1. Fig. 5(A) represents the specific main branch portion 201X at the position VA-VAin Fig. 4 and Fig. 6(A), and shows the specific main branch portion 201X with the slits 210 in the closed state. Fig. 5(B) represents the specific main branch portion 201X at the position VB-VB in Fig. 6(B), and shows the specific main branch portion 201X with the slits 210 in the open state. Fig. 6(A) represents the specific main branch portion 201X at the position VIA-VIA in Fig. 4 and Fig. 5(A), and shows the specific main branch portion 201X with the slits 210 in the closed state. Fig. 6(B) represents the specific main branch portion 201X at the position VIB-VIB in Fig. 5(B), and shows the specific main branch portion 201X with the slits 210 in the open state. In Fig. 5, illustration of the heart model 10 and the fixing member 30 is omitted for convenience, and in Fig. 6, illustration of the fixing member 30 is omitted for convenience. In each diagram, the lumen 201L of the specific main branch portion 201X is filled with a fluid F containing simulated blood MB and a contrast medium CA.

The fluid F supplied to the heart blood vessel model 20 is, for example, supplied to the specific main branch portion 201X via the proximal end 20P. That is, the intravascular pressure P of the specific main branch portion 201X increases due to an increase in the amount supplied (a faster supply rate) of the fluid F, and the intravascular pressure P of the specific main branch portion 201X decreases due to a decrease in the amount supplied (a slower supply rate) of the fluid F. In the present specification, "intravascular pressure" simulates human blood pressure, which can be measured, for example, by connecting a pressure gauge to the specific main branch portion 201X. It is also possible to determine the intravascular pressure by a hydrodynamic estimation from the flow rate. In this way, the fluid F supplied to the specific main branch portion 201X passes through the communication holes 210 described later, and is absorbed by the simulated myocardium 17. The fluid F absorbed by the simulated myocardium 17 is discharged, for example, into the lumen 10L, and further discharged to the outside of the heart model 10.

The opening and closing mechanism of the slits 210 of the specific main branch portion 201X due to an increase or a decrease in the intravascular pressure P of the specific main branch portion 201X will be described using Fig. 5 and Fig. 6. In the following description, a state where the intravascular pressure P of the specific main branch portion 201X is lowered is referred to as the "contracted state", and a state where the intravascular pressure P of the specific main branch portion 201X is elevated is referred to as the "expanded state". As shown in Fig. 5(A) and Fig. 6(A), in the contracted state, the slits 210 formed in the specific main branch portion 201X are in the closed state. On the other hand, as shown in Fig. 5(B) and Fig. 6(B), in the expanded state, the flow rate V of the fluid F flowing through the lumen 201L of the specific main branch portion 201X has increased, which increases the intravascular pressure P, and causes the slits 210 formed in the specific main branch portion 201X to be in the open state. This is because the specific main branch portion 201X is formed of an elastic material, which results in an elastic deformation of the periphery of the slits 210 due to the intravascular pressure P, which functions as a valve that opens and closes the slit 210.

The flow rate V of the fluid F in the contracted state (hereinafter, also referred to as "systolic flow rate" Vs) is, for example, 0.1 mL/sec or more, and 0.6 mL/sec or less. The intravascular pressure P of the specific main branch portion 201X in the contracted state (hereinafter, also referred to as "systolic pressure Ps") is, for example, 15 mmHg or more and 80 mmHg or less. The flow rate V of the fluid F in the expanded state (hereinafter, also referred to as "diastolic flow rate" Ve) is, for example, 0.2 mL/sec or more, and 1.3 mL/sec or less. The intravascular pressure P of the specific main branch portion 201X in the expanded state (hereinafter, also referred to as "diastolic pressure Pe") is, for example, 20 mmHg or more and 450 mmHg or less, and more specifically 80 mmHg or more and 180 mmHg or less. That is, the value of diastolic flow rate Ve is greater than the value of systolic flow Vs, and the value of diastolic pressure Pe is greater than the value of systolic pressure Ps.

In the present embodiment, the slits 210 are formed substantially letter-V shaped. As a result, in the expanded state, the periphery of the slit 210 is pushed down and expands toward the outside of the specific main branch portion 20 1X (specifically, toward the surface 10S of the heart model 10) due to the diastolic pressure Pe, which causes the openings of the slits 210 to expand. The openings that have expanded in the expanded state are released from the diastolic pressure Pe upon returning to the contracted state, which causes a contraction due to an elastic deformation and return to the original closed state. Therefore, in a state where the intravascular pressure P of the specific main branch portion 201X is low (systolic pressure Ps), the slits 210 formed in the specific main branch portion 201X are in the closed state, which, as shown in Fig. 5(A) and Fig. 6(A), is a state where the fluid F containing the contrast medium CA is not readily discharged to the outside. On the other hand, in a state where the intravascular pressure P of the specific main branch portion 201X is high (diastolic pressure Pe), the slits 210 formed in the specific main branch portion 201X are in the open state, which, as shown in Fig. 5(B) and Fig. 6(B), is a state where the fluid F containing the contrast medium CA is readily discharged from the opening to the outside. As the intravascular pressure P of the specific main branch portion 201X becomes higher, the open area of the slits 210 expands and the amount of the fluid F discharged from the openings increases, and as the intravascular pressure P becomes lower, the open area of the slits 210 becomes narrower and the amount of the fluid F discharged from the openings decreases. Consequently, as the specific main branch portion 201X switches between the contracted state/expanded state, contrast medium CA can be more precisely diffused and discharged from the slits 210, which repeatedly switch between the closed state/open state. As a result, it is possible for the contrast of the contrast images of the X-ray fluoroscopic images that are obtained using a contrast medium (images of the diffusion and disappearance of the contrast medium) to be brought even closer to that of an actual blood vessel.

As mentioned above, when the intravascular pressure P of the specific main branch portion 201X is low (systolic pressure Ps), the slit 210 returns to the closed state. Consequently, in a case where the heart simulator 1 and the heart blood vessel model 20 are used under wet conditions in which they are immersed in a fluid (such as water or physiological saline), the fluid and the contrast medium CA filling the surroundings of the heart blood vessel model 20 can be prevented from flowing back into the fluid flow path (such as the lumen 201L of the specific main branch portion 201X) through the slits 210.

The diffusion of the contrast medium CA will be described using Fig. 6(B). The specific main branch portion 201X of the present embodiment is arranged on the simulated myocardium 17 of the heart model 10. As a result, the contrast medium CA discharged through the slits 210 to the outside flows into the simulated myocardium 17 of the heart model 10. Here, as mentioned above, because the simulated myocardium 17 is formed of a porous body, the simulated myocardium 17 functions as a diffusion channel (buffer channel) that further disperses the pressure and the flow rate of the contrast medium CA that has flowed in. In this way, in the heart simulator 1 of the present embodiment, because the diffusion and discharge of the contrast medium CA is performed at both the distal end portion of the specific main branch portion 201X in the heart blood vessel model 20 and the simulated myocardium 17 of the heart model 10, the contrast medium CA can be more precisely diffused and discharged. As a result, it is possible for the contrast of the contrast images of the X-ray fluoroscopic images that are obtained using a contrast medium (images of the diffusion and disappearance of the contrast medium) to be brought even closer to that of an actual blood vessel.

In addition, in the heart simulator 1 of the present embodiment, because the slits 210 are provided in the distal end portion of the specific main branch portion 201X, the contrast of the contrast images of the X-ray fluoroscopic images obtained when using a contrast medium (images of the diffusion and disappearance of the contrast medium) can be simulated at the distal end portion of the fluid flow path (the lumen 201L of the specific main branch portion 201X).

A-4. Effects of Embodiment:
As described above, the heart simulator 1 of the present embodiment includes the heart blood vessel model 20 provided with the specific main branch portion 201X. The specific main branch portion 201X is formed of an elastic material. The specific main branch portion 201X has the slits 210 that penetrate the vessel wall VW of the specific main branch portion 201X. The slits 210 open due to an elastic deformation of the periphery of the slits 210 in response to the intravascular pressure P of the specific main branch portion 201X. That is, in the heart simulator 1 of the present embodiment, for example, it is possible to open the slits 210 by increasing the intravascular pressure P of the specific main branch portion 201X, and close the slits 210 by decreasing the intravascular pressure P. In other words, in the heart simulator 1 of the present embodiment, the fluid F (such as the contrast medium CA) flowing through the specific main branch portion 201X can be diffused and discharged through the openings of the slits 210 to the outside of the specific main branch portion 20 1X in response to the intravascular pressure P of the specific main branch portion 201X. As a result, in the heart simulator 1 of the present embodiment, the X-ray fluoroscopic images obtained when using a contrast medium are capable of simulating the contrast of the contrast medium observed in actual clinical X-ray fluoroscopic images (for example, the diffusion of the contrast medium into the narrow blood vessels such as capillaries in response to an increase or a decrease in the blood pressure). Therefore, according to the heart simulator 1 of the present embodiment, it is possible to provide a heart simulator in which the diffusion images of the contrast medium CA obtained in response to an increase or a decrease in the intravascular pressure P of the specific main branch portion 201X approximates the contrast images obtained in an actual clinical observation.

In the heart simulator 1 of the present embodiment, the slits 210 are linear slits. In the XZ cross-section of Fig. 4, the slits 210 are substantially letter-V shaped, and have a curved portion CP that protrudes in the extending direction of the specific main branch portion 201X (Z-axis direction). Consequently, the curved portions CP of the slits 210 undergo deformation and the open area of the slits 210 widens or narrows due to an increase or a decrease in the intravascular pressure P of the specific main branch portion 201X. That is, it is possible to adjust the amount of the fluid F (such as the contrast medium CA) that is diffused and discharged through the openings of the slits 210 to the outside of the specific main branch portion 201X according to the level of increase or decrease in the intravascular pressure P of the specific main branch portion 201X. As a result, according to the heart simulator 1 of the present embodiment, it is possible to provide a heart simulator in which the diffusion images of the contrast medium CA obtained in response to the level of increase or decrease in the intravascular pressure P of the specific main branch portion 20 1X approximates the contrast images obtained in an actual clinical observation.

In the heart simulator 1 of the present embodiment, the proximal end portion of the specific main branch portion 201X is provided with the supply part SP. The curved portions CP of the slits 210 protrude on the distal end portion side. That is, in the heart simulator 1 of the present embodiment, the curved portions CP of the slits 210 protrude downstream in the flow direction of the fluid F. As a result, according to the heart simulator 1 of the present embodiment, it is possible to provide a heart simulator that approximates contrast images in which the contrast medium diffuses along the flow direction of the blood, such as those obtained in an actual clinical observation.

The heart simulator 1 of the present embodiment includes the simulated myocardium 17 on which the specific main branch portion 201X is arranged. The slits 210 are formed in the surface 201S of the specific main branch portion 201X on the simulated myocardium 17 side (surface on the surface 10S side of the heart model 10). That is, in the heart simulator 1 of the present embodiment, the contrast medium CA that has diffused through the slits 210 of the specific main branch portion 201X diffuses along the heart model 10. As a result, according to the heart simulator 1 of the present embodiment, it is possible to provide a heart simulator that approximates the contrast images in which the contrast medium diffuses along the surface of the simulated myocardium 17 (that is, the surface 10S of the heart model 10), such as those obtained in an actual clinical observation, and it is also possible to improve the sense of immersion of the user of the heart simulator.

In the heart simulator 1 of the present embodiment, the slits 210 open when the intravascular pressure P is 20 mmHg or more and 450 mmHg or less. In the heart simulator 1 of the present embodiment, when the intravascular pressure P is in the range of the diastolic pressure Pe, the slits 210 open to allow the fluid F (such as the contrast medium CA) to be diffused and discharged. Therefore, according to the heart simulator 1 of the present embodiment, it is possible to provide a heart simulator that approximates the contrast images of the coronary artery such as those in an actual clinical observation.

B. Other Embodiments:

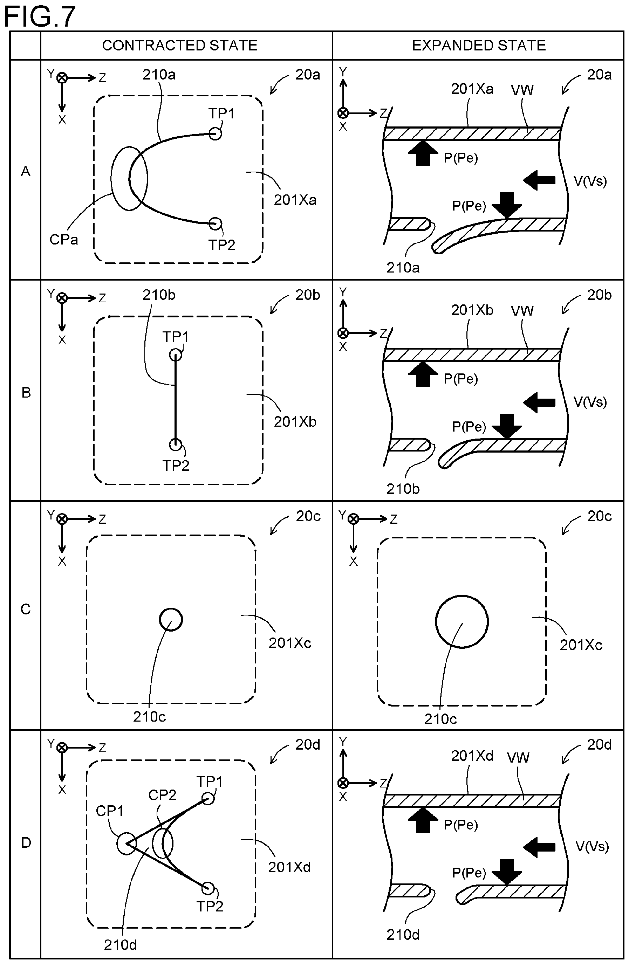

Fig. 7 is a table of explanatory diagrams of a heart blood vessel model of a heart simulator according to second to fifth embodiments. In the heart simulator of the second to fifth embodiments, the shape and structure of the specific main branch portion 201X and the communication hole 210 have been changed from the first embodiment. The table provides a vertical axis labelled A to D. In the diagrams shown in each of the rows labelled A to D, the specific main branch portion and the communication hole of the second to fifth embodiments are shown enlarged. The horizontal axis provides the labels expanded state and contracted state. In the diagrams shown in each of the columns labelled expanded state and contracted state, the expanded state and the contracted state of the specific main branch portion and the communication hole of the second to fifth embodiments are shown enlarged. Hereinafter, components of the heart simulator 1 of the second to fifth embodiments that are identical to the heart simulator of the first embodiment described above are provided with the same reference signs, and the descriptions are omitted as appropriate. In FIG. 7, illustration of the fluid F has been omitted for convenience.

B-1. Second Embodiment:
The contracted state panel in Fig. 7(A) represents a specific main branch portion 201Xa in which the slit 210a is in the closed state, and shows an XZ cross-section of the specific main branch portion 201Xa inside a part that corresponds to the part indicated by the dashed outline in Fig. 4. The expanded state panel in Fig. 7(A) shows a YZ cross-section of the specific main branch portion 201Xa, in which the slit 210a is in the open state. In the heart simulator of the second embodiment, the heart blood vessel model 20a includes the specific main branch portion 201Xa instead of the specific main branch portion 201X of the first embodiment, and the specific main branch portion 201Xa of the present embodiment differs from the specific main branch portion 201X of the first embodiment in that the shape of the slit 210a is substantially letter-U shaped.

More specifically, as shown in the contracted state panel in Fig. 7(A), the slit 210a of the second embodiment is formed substantially letter-U shaped, and has one end portion TP1, another end portion TP2, and a curved portion CPa. Like the slit 210 of the first embodiment, the slit 210a of the present embodiment is formed such that the curved portion CPa protrudes on the distal end side (negative Z-axis direction) of the specific main branch portion 201Xa. As a result, as shown in the expanded state panel in Fig. 7(A), in the expanded state of the specific main branch portion 201Xa, the periphery of the slit 210a undergoes an elastic deformation and is pushed down and expands toward the outside of the specific main branch portion 201Xa due to the diastolic pressure Pe, which causes the opening of the slit 210a to expand. The opening that has expanded in the expanded state returns to the original closed state upon returning to the contracted state. In this way, an arbitrary shape can be used for the shape of the curved portion CPa of the slit 210a. The heart simulator of the second embodiment provides the same effects as the first embodiment.

B-2. Third Embodiment:
The contracted state panel in Fig. 7(B) represents a specific main branch portion 201Xb in which the slit 210b is in the closed state, and shows an XZ cross-section of the specific main branch portion 201Xb inside a part that corresponds to the part indicated by the dashed outline in Fig. 4. The expanded state panel in Fig. 7(B) shows a YZ cross-section of the specific main branch portion 201Xb, in which the slit 210b is in the open state. In the heart simulator of the third embodiment, the heart blood vessel model 20b includes the specific main branch portion 201Xb instead of the specific main branch portion 201X of the first embodiment, and the specific main branch portion 201Xb differs from the specific main branch portion 201X of the first embodiment in that the shape of the slit 210b is substantially letter-I shaped.

More specifically, as shown in the contracted state panel in Fig. 7(B), the slit 210b of the third embodiment is formed substantially letter-I shaped, and has one end portion TP1 and another end portion TP2. As a result, as shown in the expanded state panel in Fig. 7(B), in the expanded state of the specific main branch portion 201Xb, the periphery of the slit 210b undergoes an elastic deformation and is pushed down and expands toward the outside of the specific main branch portion 201Xb due to the diastolic pressure Pe, which causes the opening of the slit 210b to expand. The opening that has expanded in the expanded state returns to the original closed state upon returning to the contracted state. The heart simulator of the third embodiment provides the same effects as those of the first embodiment, except for the effects provided by the substantially letter-V shaped communication hole 210 having the curved portion CP, which protrudes on the distal end portion side of the specific main branch portion 201X.

B-3. Fourth Embodiment:
The contracted state panel in Fig. 7(C) represents a specific main branch portion 201Xc in which the communication hole 210c is in the closed state, and shows an XZ cross-section of the specific main branch portion 201Xc inside a part that corresponds to the part indicated by the dashed outline in Fig. 4. The expanded state panel in Fig. 7(C) shows an XZ cross-section of the specific main branch portion 201Xc, in which the communication hole 210c is in the open state. In the heart simulator of the fourth embodiment, the heart blood vessel model 20c includes the specific main branch portion 201Xc instead of the specific main branch portion 201X of the first embodiment, and the specific main branch portion 201Xc differs from the specific main branch portion 201X of the first embodiment in that the shape of the communication hole 210c is that of a substantially letter-O shaped communication hole.

More specifically, the communication hole 210c of the fourth embodiment is a communication hole that closes in the contracted state and opens in the expanded state due to the elasticity of the specific main branch portion 201Xc (see the contracted state/expanded state panels in Fig. 7(C)). That is, the communication hole 210c is such that, in the expanded state of the specific main branch portion 201Xc, the periphery of the communication hole 210c undergoes an elastic deformation and expands toward the outside of the communication hole 210c due to the diastolic pressure Pe, which causes the opening of the communication hole 210c to expand. The opening that has expanded in the expanded state returns to the original closed state upon returning to the contracted state. The heart simulator of the fourth embodiment provides the same effects as those of the first embodiment, except for the effects provided by the substantially letter-V shaped communication hole 210 having the curved portion CP, which protrudes on the distal end portion side of the specific main branch portion 201X.

B-4. Fifth Embodiment:
The contracted state panel in Fig. 7(D) represents a specific main branch portion 201Xd in which the communication hole 210d is in the closed state, and shows an XZ cross-section of the specific main branch portion 201Xd inside a part that corresponds to the part indicated by the dashed outline in Fig. 4. The expanded state panel in Fig. 7(D) shows a YZ cross-section of the specific main branch portion 201Xd, in which the communication hole 210d is in the open state. In the heart simulator of the fifth embodiment, the heart blood vessel model 20d includes the specific main branch portion 201Xd instead of the specific main branch portion 201X of the first embodiment, and the specific main branch portion 201Xd differs from the specific main branch portion 201X of the first embodiment in that a communication hole is provided in addition to a slit, which has the communication hole 210d formed as part of the slit.

More specifically, as shown in the contracted state panel in Fig. 7(D), the communication hole 210d of the fifth embodiment is configured by a substantially letter-V shaped first periphery, which has one end portion TP1, another end portion TP2, and a curved portion CP1, and a substantially letter-U shaped second periphery having the end portion TP1, the end portion TP2, and a curved portion CP2. The communication hole 210d has a slit shape in the vicinity of the end portions TP1 and TP2, and has a communication hole between the first periphery and the second periphery. The communication hole 210d is a hole in which the space between the first periphery and the second periphery closes in the contracted state and opens in the expanded state due to the elasticity of the specific main branch portion 201Xd (see the contracted state/expanded state panels in Fig. 7(D)). Similar to the communication hole 210 of the first embodiment, the communication hole 210d is formed such that the curved portion CP1 and the curved portion CP2 protrude on the distal end side (negative Z-axis direction) of the specific main branch portion 201Xd. As a result, as shown in the expanded state panel in Fig. 7(D), in the expanded state of the specific main branch portion 201Xd, the periphery of the communication hole 210d undergoes an elastic deformation and is pushed down and expands toward the outside of the specific main branch portion 201Xd due to the diastolic pressure Pe, which causes the opening of the communication hole 210d to expand. The opening that has expanded in the expanded state returns to the original closed state upon returning to the contracted state. The heart simulator of the fifth embodiment provides the same effects as the first embodiment.

C. Modifications:
The disclosed embodiments are not limited to the embodiments described above and may be carried out in various aspects without departing from the spirit thereof, and for example, the following modifications are possible.

In the embodiments described above, examples of the configuration of the heart simulator 1 have been described as the blood vessel model, but it is not limited to this. For example, the blood vessel model may be the heart blood vessel model 20. Other than a heart blood vessel model, the blood vessel model may be a brain blood vessel model, a liver blood vessel model, or a lower extremity blood vessel model. The communication hole 210 of the present embodiments may be formed in these blood vessel models.

In the embodiments described above, the heart model 10 does not have to include the simulated epicardium 18.

In the embodiments described above, the heart blood vessel model 20 may include a model simulating the veins in addition to the coronary artery model 200. In the embodiments described above, the heart blood vessel model 20 include main branch portions 201, side branch portions 202, connection portions 203, and branched portions 204, but is not limited to this, and the components other than the main branch portions 201 may be omitted. For example, a configuration is possible that omits the side branch portions 202 and includes a single main branch portion 201, and further, for example, a configuration is possible in which the connection portions 203 are omitted, and the main branch portions 201 are integrally molded such that the main branch portions 201 cannot be exchanged. For example, the branched portions 204 may be omitted, and the coronary artery model 200 may be configured by main branch portions 201 that do not have branched portions 204.

In the embodiments described above, the proximal end 20P of the heart blood vessel model 20 may, for example, be connected to the heart model 10. In such a configuration, the behavior of the heart model 10 and the dispersion timing of the fluid F from the specific main branch portion 201X of the heart blood vessel model 20 can be approximated to those of an actual human body. The proximal end 20P of the heart blood vessel model 20 is not limited to being connected to the heart model 10, and may be connected to another biological model.

In the embodiments described above, the communication holes 210 are formed only in the specific main branch portion 201X, but it is not limited to this. For example, the communication holes 210 of the present embodiments may be formed in one or more of the other main branch portions 201 and side branch portions 202, the main branch portions 201 or side branch portions 202 of the right coronary artery model 200RT, and the veins described above. In the embodiments described above, the communication holes 210 are formed on the distal end side of the specific main branch portion 201X, but it is not limited to this, and they may be formed on the proximal end side of the specific main branch portion 201X. Such a configuration also enables the narrow blood vessels such as capillaries that are connected to the proximal end side of the specific main branch portion 201X to be simulated in the X-ray fluoroscopic images.

In the embodiments described above, the shape of the communication holes 210 is not limited to being substantially letter-V shaped or substantially letter-U shaped, and for example, it may be another shape such as a wave shape, a star shape, or a keyhole shape.

In the embodiments described above, the communication holes 210 do not have to be formed in the surface of the specific main branch portion 201X on the simulated myocardium 17 side. The positions in which the communication holes 210 are formed is not particularly limited, and they may be formed so as to overlap on a plurality of lines parallel to the central axis OL, or they may be randomly formed.

In the embodiments described above, communication holes 210 having one type of shape are formed in the specific main branch portion 201X, but it is not limited to this, and a plurality of types of communication holes 210 may be formed in combination in the specific main branch portion 201X.

### DESCRIPTION OF REFERENCE NUMERALS

1: Heart simulator
10: Heart model
16: Balloon
17: Simulated myocardium
18: Simulated epicardium
20: Heart blood vessel model
20D: Distal end
20P: Proximal end
20a, 20b, 20c, 20d: Heart blood vessel model
30: Fixing member
200: Coronary artery model
200LF: Left coronary artery model
200RT: Right coronary artery model
201: Main branch portion
201X, 201Xa, 201Xb, 201Xc, 201Xd: Specific main branch portion
202: Side branch portion
203: Connection portion
204: Branched portion
210, 210a, 210b, 210c, 210d: Communication hole
210, 210a: Slit
CA: Contrast medium
SP: Supply part
VW: Vessel wall

## Claims

1. A blood vessel model comprising a simulated blood vessel body formed of an elastic material, wherein
the simulated blood vessel body has a communication hole that penetrates a vessel wall of the simulated blood vessel body, and
the communication hole opens when a periphery of the communication hole undergoes elastic deformation in response to an intravascular pressure of the simulated blood vessel body.

2. The blood vessel model according to claim 1, wherein
the communication hole is a linear slit, and
the slit, when viewed in a direction penetrating the vessel wall, is substantially letter-V shaped or substantially letter-U shaped, and has a curved portion protruding in an extending direction of the simulated blood vessel body.

3. The blood vessel model according to claim 2, wherein
the simulated blood vessel body has a supply part at one end portion that is capable of supplying a fluid to an interior of the simulated blood vessel body, and
the curved portion of the slit protrudes toward an end portion side that is located on an opposite side, in the extending direction, to an end portion on which the supply part is located.

4. The blood vessel model according to any one of claims 1 to 3, wherein
the blood vessel model is further provided with a simulated myocardium on which the simulated blood vessel body is arranged, and
the communication hole is formed in a surface of the simulated blood vessel body on the simulated myocardium side.

5. The blood vessel model according to any one of claims 1 to 4, wherein
the blood vessel model is a heart blood vessel model, and
the communication hole opens when the intravascular pressure is 20 mmHg or more and 450 mmHg or less.
